# EUROPEAN PATENT SPECIFICATION

(11) **EP 2 424 911 B1**
(45) Date of publication and mention of the grant of the patent: **23.03.2016**
(21) Application number: 10770074.2
(22) Date of filing: 30.04.2010
(51) Int. Cl.: C08G 18/00, C09D 201/00, E04F 15/02, E04F 21/24

(54) **UVV CURABLE COATING COMPOSITIONS AND METHOD FOR COATING FLOORING AND OTHER SUBSTRATES WITH SAME**
UVV-HÄRTBARE BESCHICHTUNGSZUSAMMENSETZUNGEN UND VERFAHREN ZUR BESCHICHTUNG VON BODENBELÄGEN UND ANDEREN UNTERLAGEN DAMIT
COMPOSITIONS DE REVÊTEMENT DURCISSABLE PAR UVV ET PROCÉDÉ POUR LE REVÊTEMENT D'UN REVÊTEMENT DE SOL ET D'AUTRES SUBSTRATS AVEC CELLES-CI

(30) Priority: 30.04.2009 US 173996 P
(43) Date of publication of application: 07.03.2012
(73) Proprietor: Armstrong World Industries, Inc., Lancaster, PA 17604-3001 (US)
(72) Inventor: TIAN, Dong, Lancaster PA 17601 (US); ROSS, Jeffrey, S., Lancaster PA 17603 (US); MONROE, Susan, York, Pennsylvania PA 17402 (US); LEININGER, Larry, W., Akron PA 17501 (US)
(74) Representative: von Füner, Nicolai
(86) International application number: PCT/US2010/001299
(87) International publication number: WO 2010/126618

(56) References cited:
- EP-A1- 2 080 790
- WO-A1-2008/154095
- WO-A2-2009/111015
- US-A- 4 180 474
- US-A- 5 767 169
- US-A- 6 075 065
- US-A1- 2002 106 173
- US-A1- 2002 156 143
- US-A1- 2003 213 931
- US-B1- 6 174 932
- US-B2- 7 063 877

## Description

### FIELD OF THE INVENTION

The present invention relates to radiation curable compositions for use in coating substrates, and more particularly to ultraviolet (UV) V spectra light emitting diode (LED) curable coatings for flooring and other applications.

Radiation curable coatings, such as UV curable coatings, are applied to various types of substrates to enhance their durability and finish These radiation curable coatings are typically mixtures of resins, oligomers, and monomers that are radiation cured after being applied to the substrate. The radiation curing polymerizes and/or cross-links the resins, monomers and oligomers to produce a high or low gloss coating haying desirable properties, including abrasion and chemical resistance. Radiation curable coatings of this type are often referred to as topcoats or wear layers and are used, for example, in a wide variety of flooring applications, such as on linoleum, hardwood, resilient sheet, and tile flooring.

US 6 174 932 B1 refers to a UV curable, flexible, and paintable composition obtained by combining a mixture comprising one epoxy, one polyol, a thickener, a photoinitiator and one monomer selected from acrylates and caprolactones, and cured with radiation using standard UV curing lamps. WO 2009/111015 A2 refers to a process for coating a wood substrate comprising an aqueous UV curable composition cured with UVA radiation from lamps having metal halide bulbs. EP 2 080 790 A1 refers to a method of coating a metal substrate comprising a nonaqueous UV curable composition cured with UVA radiation from lamps having metal halide bulbs. US 2004/156143 A1 refers to a radiation curable coating composition comprising a binder composition, a flatting agent and/or hard particulate materials and one free-radical generating compound.

Current UV curable coatings are designed to be cured by conventional UV lamps, such as mercury arc lamps or microwave powered, electrode-less mercury lamps, which emit the strongest wavelengths in the UVA range of 315 to 400 nm, and which also have emission in wavelength regions below 315 nm. In comparison to UV lamps, UVV LEDs emit the strongest wavelength radiation in the UVV range of 400 to 450 nm. Additionally, UVV LEDs do not generate ozone, have 75% less electrical power consumption, do not emit infrared (IR) heat on the substrate, have a much longer life (15,000+ hours vs. 1,500 hours for mercury bulbs), and can be turned on and off instantly.

However, because current UV curable floor coatings are designed to cure in the UVA range of 315 to 400 nm emitted by conventional UV lamps, known UV-curable floor coatings cannot be cured with UVV radiation and thus, the advantages to be realized with UVV LEDs cannot be achieved.

It would therefore be desirable to have a radiation curable coating for substrates that can be cured with UVV LEDs in the UVV range of 400 to 450 nm.

### BRIEF SUMMARY OF THE INVENTION

Exemplary embodiments are directed to compositions that can be cured with ultraviolet V spectra radiation (i.e. emitting the strongest wavelengths from between 400 to 450 nm) to form a coating for flooring and other substrates.

According to an embodiment, a method of making a coated substrate is disclosed. The method includes coating the substrate with a coating composition in which the composition comprises (a) a resin and (b) a cationic type photoinitiator, and (c) a polyol cross-linker, the composition being curable by radiation in the UVV range of 400 to 450 nm. The method further includes curing the coating by subjecting the coated substrate under a bank or array of UVV light-emitting diodes (LED) radiation having the strongest wavelength in the UVV range of 400 to 450 nm.

According to another embodiment, a UVV curable composition is disclosed that comprises (a) a resin and (b) a cationic type photoinitiator and (c) a polyol cross-linker, wherein the composition curable under a bank or array of UVV light-emitting diodes (LED) radiation having the strongest wavelength in the UVV range of 400 to 450 nm. In said embodiment, the resin is selected from the group consisting of an acrylated urethane resin, an acrylate polyester resin, vinyl ether resins, epoxide resins, and combinations thereof.

According to still another embodiment, a floor covering comprises a UVV curable composition, wherein the UVV curable composition comprises (a) a resin selected from the group consisting of an acrylated urethane resin, an acrylated polyester resin, and combinations thereof and (b) a cationic type photoinitiator and (c) a polyol cross-linker, wherein the composition is curable under a bank or array of UVV light-emitting diodes (LED) radiation having the strongest wavelength in the UVV range of 400 to 450 nm.

The subject-matter of preferred embodiments is disclosed in the dependent claims.

An advantage of certain embodiments is that compositions which are curable by UVV LED radiation can be cured without generating ozone, with reduced electrical power consumption, and without the absorption of IR heat by the underlying substrate.

Another advantage is that the gloss of a particular composition can be controlled based on curing conditions such that the same formulation can be used to yield either a high gloss or a low gloss coating.

Still another advantage is that the use of UVV radiation permits the inclusion of certain additives that have high loadings of UV-blockers which would ordinarily prevent UV-cure using conventional UA radiation.

In certain embodiments, the composition has little or no pigment to result in a clear coating. In other embodiments, an effective amount of pigment may be added to the composition to form a pigmented coating. In those embodiments employing pigment, a photosensitizer is also included.

Other features and advantages of the present invention will be apparent from the following more detailed description of exemplary embodiments, which illustrate, by way of example, the principles of the invention.

### BRIEF DESCRIPTION OF THE DRAWING

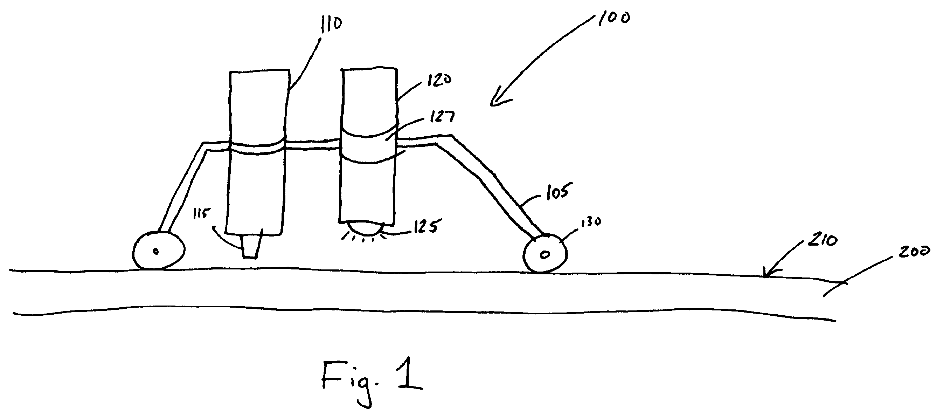

Figure 1 illustrates a seam sealer tool in accordance with an exemplary embodiment.

### DETAILED DESCRIPTION OF THE EMBODIMENT(S)

Embodiments are directed to a radiation curable coating, such as a UVV LED curable coating, that can be applied to a substrate and cured to a clear or pigmented wear layer or topcoat by subjecting the radiation curable coating to UVV LED radiation having the strongest wavelengths in the UVV range of 400 to 450 nm.

Generally, the coating is created as either a solvent base or waterborne formulation comprised of a resin and a photoinitiator in which the composition is curable by radiation having the strongest wavelengths in the UVV range of 400 to 450 nm. That is, the initiator is one which is activated by UVV radiation or, alternatively, is present with one or more other constituents that result in curing by UVV radiation. The photoinitiator is typically a free radical photoinitiator, but in some embodiments may also be a cationic initiator. In embodiments in which the free radical photoinitiator is not itself activated by exposure to UVV radiation, an amine synergist may be used, while a cationic initiator is used in combination with a photosensitizer to achieve activation by UVV radiation. Other methods of curing include thiolene-acrylate polymerization, oxidative drying, along with various combinations of these methods, provided that an initiator is used that is activated by exposure to UVV radiation.

The coating composition can further include one or more reactive diluents; typically the reactive diluent is an acrylate. Other optional ingredients include one or more additives included in the composition. Exemplary additives include amine synergists; surfactants; flattening agents (organic and/or inorganic); abrasion fillers such as aluminum oxide; UV blockers; fillers such as talc, limestone, wood and shell flours; fibers; rheology control additives; and any other additives known in the art for use with other UV curable coatings.

The coating composition preferably contains less than an effective amount of pigment in order to produce a coating that is clear upon curing. However, the use of pigments is not precluded and may be used to create colored coatings. Any pigments or dyes as are used with known UV curable coatings may be employed, provided that the pigments or dyes do not interfere with the ability of the coating to be cured by UVV radiation. It will be appreciated that a composition with a pigment or dye or other additive may have a different cure profile from the coating without the pigment or dye. In those embodiments employing a pigment or dye, a photosensitizer is used in combination with the pigment or dye. Exemplary photosensitizers include isopropyl thioxanthone and 1-chloro-4-propoxy-thioxanthone by way of example.

The composition contains up to 99% by weight resin and between 1% to 10% by weight of the photoinitiator, more typically between 1% to 3% by weight photoinitiator. When a reactive diluent is used, it is present between 0.1% to 90% by weight of the composition, more typically between 5% to 70% by weight. Any additives are present up to 30 % by weight of the composition. The identified weight percents are without respect to water or solvent in which the composition is formulated. It will be appreciated that higher loadings of filler may be provided, for example, if a material is to be formulated that has the consistency of a putty or paste.

According to one embodiment, the resin of the radiation curable coating is selected from the group consisting of urethane acrylates, polyester acrylates and combinations thereof. The urethane acrylates and the polyester acrylates may be prepared, for example, according to the procedures disclosed in U.S. Patent Nos. 5,719,227, 5,003,026 and 5543,232,

According to another embodiment, when the resin of the radiation curable coating is a urethane acrylate and/or polyester acrylate, an acrylate reactive diluent is also preferably employed if the coating is to be used in flooring applications. Exemplary acrylate reactive diluents include (meth)acrylic acid, isobornyl (meth)acrylate, isodecyl (meth)acrylate, hexanediol di(meth)acrylate, N-vinyl formamide, tetraethylene glycol (meth)acrylate, tripropylene glycol(meth)acrylate, neopentyl glycol di(meth)acrylate, ethoxylated neopentyl glycol di(meth)acrylate, propoxylated neopentyl glycol di(meth)acrylate, trimethylolpropane tri(meth)acrylate, ethoxylated trimethylolpropane tri(meth)acrylate, propoxylated trimethylolpropane tri(meth)acrylate, ethoxylated or propoxylated tripropylene glycol di(meth)acrylate, pentaerythritol tri(meth)acrylate, pentaerythritol tetra(meth)acrylate, tris (2-hydroxy ethyl) isocyanurate tri(meth)acrylate and combinations thereof.

In another embodiment, the resin of the coating composition includes vinyl ether resins and/or epoxide resins in combination with polyol crosslinkers. Exemplary vinyl ,, ether resins include 1,4-butanediol divinyl ether, diethyleneglycol divinyl ether, triethyleneglycol divinyl ether, n-butyl vinyl ether, tert-butyl vinyl ether, cyclohexyl vinyl ether, dodecyl vinyl ether, octadecyl vinyl ether, trimethylolpropane diallyl ether, allyl pentaerythritol, and trimethylolpropane monoallyl ether.

Exemplary epoxide resins include 3,4-epoxycyclohexylmethyl-3,4-epoxycyclohexane carboxylate; bis-(3,4-epoxycyclohexyl) adipate, 3-ethyl-3-hydroxy-methyl-oxetane; 1,4-butanediol diglycidyl ether; 1,6 hexanediol diglycidyl ether; ethylene glycol diglycidyl ether; polypropylene glycol diglycidyl ether; polyglycol diglycidyl ether; propoxylated glycerin triglycidyl ether; monoglycidyl ester of neodecanoic acid; epoxidized soy; epoxidized linseed oil; epoxidized polybutadiene resins, and combinations thereof.

Suitable polyol crosslinkers include diethylene glycol; neopentyl glycol; glycerol; trimethylol propane; polyether polyols, such as polytetramethylene ether glycol; polyester polyols, such as caprolactone diol and caprolactone triol; aliphatic polyester polyols derived from diacids and/or diols; and combinations thereof, all by way of example.

Where the polyol is an aliphatic polyester polyol, it may be desriable to employ biobased polyols in which the diacids and diols used to make the polyester polyols are derived from renewable resources, for example, those which are derived from corn, sugar cane, vegetable oil and the like. Exemplary biobased compounds for use in forming biobased polyols include sebacic acid, succinic acid, citric acid, azelaic acid, fumaric acid, lactic acid, 1,3-propanediol, 1,4-butandiol, and glycerol. Table 1A shows some examples of some biobased aliphatic polyester polyol formulations that may be used with exemplary embodiments. Biobased materials are organic materials containing an amount of non-fossil carbon sourced from biomass, such as plants, agricultural crops, wood waste, animal waste, fats, and oils. The biobased materials formed from biomass processes have a different radioactive C 14 signature than those produced from fossil fuels. Because the biobased materials are organic materials containing an amount of non-fossil carbon sourced from biomass, the biobased materials may not necessarily be derived 100% from biomass. Generally, the amount of biobased content in the biobased material is the amount of biobased carbon in the material or product as a fraction weight (mass) or percentage weight (mass) of total organic carbon in the material or product. ASTM D6866 (2005) describes a test method for determining Biobased Content. Theoretical Biobased Content was calculated for the resultant polyester resins in Table 1A.

**Table 1A - Biobased Polyester Polyol Formulations**

| | Polyol-1 | Polyol-2 | Polyol-3 | Polyol-4 | Polyol-5 | Polyol-6 | Polyol-7 | Polyol-8 |
|---|---|---|---|---|---|---|---|---|
| Ingredient | Amt (g) | Amt (g) | Amt (g) | Amt (g) | Amt (g) | Amt (g) | Amt (g) | Amt (g) |
| Sebacic Acid | 639.18 | 648.31 | 663.10 | 672.94 | 0 | 0 | 0 | 0 |
| Succinic Acid | 0 | 0 | 0 | 0 | 539.50 | 551.69 | 557.92 | 570.97 |
| 1,3 Propanediol | 360.72 | 291.48 | 336.80 | 264.57 | 460.40 | 360.65 | 441.99 | 338.32 |
| Glycerine | 0 | 60.10 | 0 | 62.39 | 0 | 87.56 | 0 | 90.81 |
| Fascat 4100® | 0.10 | 0.10 | 0.10 | 0.10 | 0.10 | 0.10 | 0.10 | 0.10 |
| Wt % Renewable Materials | 99.99 | 99.99 | 99.99 | 99.99 | 99.99 | 99.99 | 99.99 | 99.99 |
| Wt % Biobased Content | 99.99 | 99.99 | 99.99 | 99.99 | 99.99 | 99.99 | 99.99 | 99.99 |

In those embodiments employing a biobased polyol, the polyol is directly blended into the radiation curable biobased coating formulation along with at least one epoxy resin, vinyl ether resin, or any other suitable resin, along with at least one initiator which may be, for example, a cationic type photoinitiator and a photosensitizer.

In some embodiments, and particularly those which employ bio-based resins, a wide range of resins may be used to formulate the coating compositions in addition to epoxy and vinyl ether resins. Exemplary other classes of resins that may be employed include (meth)acrylate oligomers and/or monomers, including both petroleum-based and bio-based; N-vinyl amides (e.g., N-vinyl formamide, N-vinylpyrrolidinone, N-vinylcaprolactam, and N-methyl-N-vinylacetamide); maleate and fumarate esters; vinyl esters; allyl ethers; allyl esters such as diallyl-phthlalate; vinyl aromatics, such as styrene and alpha-methyl styrene; maleimides and derivatives thereof; epoxy resins, such as oxiranes, glycidyl ethers, and cycloaliphatic epoxides; propenyl ethers; oxetanes; lactones; thiols; unsaturated polyesters; and unsaturated fatty acids, oils, and waxes.

Suitable free radical photoinitiators include unimolecular (Norrish Type I and Type II), bimolecular (Type II), biomolecular photosensitization (energy transfer and charge transfer). Exemplary classes of free radical photoinitiators that may be employed include but not limit to phenyl bis (2,4,6-trimethyl benzoyl) phosphine oxide, Esacure^{®} KTO-46 (a mixture of phosphine oxide, Esacure^{®} KIP 150 and Esacure^{®} TZT), 2,4,6-trimethylbenzoyldiphenyl phosphine oxide, isopropylthioxanthone, 1-chloro-4-propoxy-thioxanthone, 2,4-diethylthioxanthone, 2-chlorothioxanthone, camphorquinone, and 2-ethyl anthranquinone.

An amine synergist may be used with these free radical photoinitiators. Examples of amine synergist include 2-ethylhexyl-4-dimethylamino benzoate, ethyl 4-(dimethylamine) benzoate, N-methy diethanolamine, 2-dimethylamino ethylbenzoate, and butoxyethyl-4-dimethylamino benzoate.

Suitable cationic photoinitiators include iodonium salts and sulfonium salts, such as triarylsulfonium hexafluoroantimonate salts, triarylsulfonium hexafluorophosphate salts, and bis(4-methylphenyl)-hexafluorophosphate-(1)-iodonium. Suitable photosensitizers for the cationic photoinitiators include isopropyl thioxanthone, 1-chloro-4-propoxy-thioxanthone, 2,4-diethylthioxanthone, and 2-chlorothioxanthone, all by way of example only.

The process of manufacturing a coated substrate with UVV LEDs is more environmentally friendly than present UV cured processes because UVV LEDs do not generate ozone, have 75% less electrical power consumption, have a much longer life (15,000+ hours vs. 1,500 hours for mercury bulbs), and can be turned on and off instantly. Furthermore, because UVV LEDs do not emit IR radiation, they can be used to cure coatings that are applied to a freestanding film before the film is laminated to a flooring substrate. The use of UVV radiation also increases safety for ambient exposure to the radiation experienced by workers involved in the manufacturing process.

If a bio-based acrylated urethane resin is used, the coated substrate and method of making it can be particularly environment- friendly. The bio-based acrylated urethane resin can be produced using a vegetable oil based polyol such as castor oil and soya oil based polyols, and/or biobased polyester polyol comprising diacides and/or diols that derived from renewable resources such as corn, sugar cane, vegetable oil and the like and/or polyether polyol comprising diols also derived from renewable resources. Examples of biobased components that can be used to make polyester polyols or polyether polyols are sebacic acid, succinic acid, citric acid, azelaic acid, fumaric acid, lactic acid, 1, 3-propanediol, 1, 4-butanediol, and glycerol.

Among the advantages which may be achieved using coatings in accordance with exemplary embodiments is the ability to cure formulations that have high loadings of certain additives commonly considered to be UV-blockers, i.e., which are resistant to UVA and UVB radiation and could ordinarily not be used in conventional coatings because they would prevent UV-cure.

Exemplary embodiments can also be used in combination with selective and or incremental curing procedure in which one part of the formulation is cured by UVV radiation, followed or preceded by curing in the UVA and UVB spectra. This could be used, for example, to cure the coating to the point of being tack-free, but delaying a full cure of the coating until a later point, such as during or after installation. In this manner, shrinkage stress can be reduced by allowing stress-relaxation in the coating prior to the final cure. It can further be used, for example, to improve adhesion between coats by using wavelength specific curing conditions (i.e. UVV or UVA) as an initial partial cure to adhere the layers together, then a subsequent full cure using a different wavelength (i.e., UVA or UVV). A partial cure may be achieved, for example, by decreasing the energy density to avoid fully curing the composition. Alternatively, or in combination, the amount of UVV activated photoinitiator in the formulation can be decreased and/or offset with an equal or different amount of UVA activated photoinitiator.

Combining UVV curing that was preceded by UVA and/or UVB curing may also permit the use of certain colorants such as dyes, for example, in the manufacture of flooring or other substrates in situations where those coloranfs would be photo-bleached during conventional UV curing exposure. They could instead be applied prior to a UVV activated final cure.

Any substrate may be employed with the coatings described herein and can be constructed from a variety of materials, such as wood, ceramic, plastic, or metal, all by way of example. Additionally, the substrate may be, for example, a substrate of a flooring application, such as linoleum, hardwood, laminate, cork, bamboo, ceramic, resilient sheet, or tile.

The flooring substrates to which the coating is applied may be of any size and include sheet goods, which may be in the range of, for example, 0.9144 m (three feet) to 5.4864 m (eighteen feet) wide; engineered wood; solid wood; tile that are cut from such sheet goods; and individually formed tile, typically ranging from 0.09 m² (one foot square) to 0.28 m² (three foot square), although tiles and other products may also be formed in other shapes, such as rectangles, triangles, hexagons or octagons. In some cases, such as in the case of tiles, engineered wood and solid wood, the flooring substrates may also be in the form of a plank, typically having a width in the range of 7.62 cm (three inches) to 30.48 cm (twelve inches).

It will be appreciated that exemplary embodiments are not limited to curing top coats, but may be applied as sub-layers below the top coat or for use in creating the substrate. Additionally, the coating may be selectively applied to the edges or back side of the substrate, for example, to create a decorative effect or to seal it.

The sheet substrate, a plurality of the planks and/or the cut tiles can be subjected to curing by UVV radiation by being passed under a bank or array of UVV LEDs at a distance of between 0.158 cm (1/16 in.) and 5.08 cm (2 in.) from the surface of the substrate, more typically between 0.476 cm (3/16) in. and 2.54 cm 1 in. However, it will be appreciated that mirrors may be employed to permit greater working distances or to permit intentional variation of the working distance as a way to control the spectral irradiance at the surface of the substrate, as is used, for example, with other types of UV radiation.

The application of the coating composition and/or the curing may be part of a continuous process at or near the end of the line during the substrate manufacture. Alternatively either or both of the coating and curing may be conducted as a separate process on previously manufactured goods. In either case, the bank or array of UVV LEDs should be at least as wide as the substrate to be coated to ensure even curing and avoid edge effects.

It will be appreciated that line speed, energy density and other variables of the curing process may depend on the particular formulation of the coating composition and the thickness to which it is applied, which may in turn depend on the substrate selected and the application for which it will be employed.

Because the use of LEDs reduces or eliminates the IR heat emitted by current UV lamps, the coating may be initially applied and cured onto a free standing film, after which the film can itself be laminated onto the flooring or other substrate. While LEDs do get hot during operation generally, that heat is not in the form of infrared radiation irradiated to the surface of the substrate, as occurs in conventional mercury arc lamps and microwave powered mercury lamps. The heat generated by the LEDs can be carried away through convection or conduction of a cooling fluid, typically water or air, in thermal contact with the circuits of the LED.

The gloss of the coated substrate may be controlled by controlling (a) the amount of flatting agent in the composition applied to the surface, (b) the amount of power applied to the coated surface or (c) the temperature of the coated surface when the coated surface is subjected to UVV radiation. In some embodiments, a combination of these factors may be controlled in combination to achieve a desired level of gloss. In particular, the lack of infrared radiation from the LEDs means that the gloss level can be controlled by electromagnetic radiation, not by heat energy. As a result, low gloss coatings can be formed at lower temperatures than previously could be achieved, resulting in better dimensional stability of the coating.

According to another embodiment of the invention, the coating compositions may be applied and cured after or during installation, such as joining together two pieces of already coated and cured flooring. For example, the coating composition may be used and applied as a seam sealer. The composition provided for the seam sealer is identical to that of the composition that was applied to the flooring and cured during manufacture. The gloss of that composition can still be approximated to that of the flooring to which it is applied by varying the height and/or power of the UVV radiation when applied, or by adjusting the amount of flattening agent in the composition to be used in the seam sealing operation.

As illustrated in Figure 1, a seam sealer tool 100 may be employed for such circumstances. Advantageously, the tool 100 may be constructed as a handheld tool that includes a frame 105. The UVV curable composition may be stored inside a tube 110 having an applicator 115 and which is attached to the frame 105. One or more UVV LEDs 125 is coupled to the tool 100 as part of a lamp assembly 120, which may, for example, be a battery powered LED flashlight or other type of device that is also attached to the frame 105. The tool 100 further includes one or more rollers 130 or other travel mechanism to aid with achieving consistent travel of the tool 100 when in use, thereby providing a more even application and cure.

By staying in constant contact with the surface 210 of flooring 200 or other substrate, the rollers 130 keep the UVV LEDs at a constant height from the surface 210 during use of the tool. As described, it may be desirable to adjust that height depending on the level of gloss desired to be achieved. The height of the LEDs 125 can be adjusted in any suitable manner, for example through the use of a clamp mechanism 127, that can also be used to attach the lamp assembly 120 to the frame 105 of the tool 100.

Although described with respect to UVV curable coatings and UVV LEDs, it will be appreciated that the seam sealer tool 100 could similarly be used with any combination of curable material and a corresponding source of radiation. It will further be appreciated that in certain situations it may be advantageous to apply the coating and perform the curing using separate tools.

### EXAMPLES

The invention is further described by way of the following examples.

### EXAMPLES 1 to 24

The formulations shown in Tables 1B, 2A and 2B were prepared as coating compositions in accordance with exemplary embodiments to be cured using UVV LEDs in which a urethane acrylate was used as the resin. For each case, all of the identified ingredients were added in a small brown glass jar and mixed with high speed agitation until the photoinitiator was dissolved. Examples 1 to 5 and 11 to 24 were mixed at 54 °C (130°F), while examples 6 to 10 were mixed at room temperature. The compound in the Tables identified as "Duracote 7^{®}" refers to an acrylated urethane of the type disclosed in US Patent No. 5,719,227. The "bio-based acrylated urethane" resin is similar to Duracote 7^{®}, except that it is based on a castor oil polyol starting material, as described in U.S. Publication No. 2009/0275674.

| TABLE 1B -Composition for Examples 1 to 10 | | | | | | | | | | | | | | |
|---|---|---|---|---|---|---|---|---|---|---|---|---|---|---|
| | | | | | Ex 1 | Ex 2 | Ex 3 | Ex 4 | Ex 5 | Ex 6 | Ex 7 | Ex 8 | Ex 9 | Ex 10 |
| Trade Name | Supplier | Chemical Name | Chemical Class | Function | Amt(g) | Amt(g) | Amt(g) | Amt(g) | Amt(g) | Amt(g) | Amt(g) | Amt(g) | Amt(g) | Amt(g) |
| Duracote 7 ® | Armstrong | Acrvlated Urethane | | resin | 97.00 | 97.00 | 97.00 | 97.00 | 97.00 | 0.00 | 0.00 | 0.00 | 0.00 | 0.00 |
| Bio-Based | Armstrong | Acrylated Urethane | | resin | 0.00 | 0.00 | 0.00 | 0.00 | 0.00 | 50.00 | 50.00 | 50.00 | 50.00 | 50.00 |
| SR-499 | Sartomer | Ethoxylated trimethylol propane triacrylate | | diluent | 0.00 | 0.00 | 0.00 | 0.00 | 0.00 | 7.70 | 7.70 | 7.70 | 7.70 | 7.70 |
| SR-502 | Sartomer | Ethoxylated trimethylol propane triacrylate | | diluent | 0.00 | 0.00 | 0.00 | 0.00 | 0.00 | 7.70 | 7.70 | 7.70 | 7.70 | 7.70 |
| SR-351 | Sartomer | Trimethylol propane triacrylate | | diluent | 0.00 | 0.00 | 0.00 | 0.00 | 0.00 | 12.73 | 12.73 | 12.73 | 12.73 | 12.73 |
| Silwet L-7200^{®} | | | | surfactant | 0.00 | 0.00 | 0.00 | 0.00 | 0.00 | 0.07 | 0.07 | 0.07 | 0.07 | 0.07 |
| Irgacure 2020® | Ciba-Geigy | mixture 20wt% Irgacure 819/80wt% Darocur 1173 | Bis Acyl Phosphine/ α-Hydroxyketone | photoinitiator | 3.00 | 0.00 | 0.00 | 0.00 | 0.00 | 2.42 | 0.00 | 0.00 | 0.00 | 0.00 |
| Irgacure 907 ® | Ciba-Geigy | 2-Methyl-1-[4-(methylthio)phenyl] -2-(4-morpholinyl)-1-propanone | α-Aminoketone | photoinitiator | 0.00 | 3.00 | 0.00 | 0.00 | 0.00 | 0.00 | 2.42 | 0.00 | 0.00 | 0.00 |
| Irgacure 819® | Ciba-Geigy | Phosphine oxide, phenyl bis (2,4,6-trimethyl benzoyl) | Bis Acyl Phosphine | photoinitiator | 0.00 | 0.00 | 3.00 | 0.00 | 0.00 | 0.00 | 0.00 | 2.42 | 0.00 | 0.00 |
| Esacure KTO-46® | Lamberti | Mixture of phosphine oxide, Esacure KIP150 and Esacure TZT | Acylphosphine oxide based | photoinitiator | 0.00 | 0.00 | 0.00 | 3.00 | 0.00 | 0.00 | 0.00 | 0.00 | 2.42 | 0.00 |
| Lucirin® TPO | BASF | 2,4,6-trimethylbenzoyldiphenyl phosphine oxide | Mono Acyl Phosphine | photoinitiator | 0.00 | 0.00 | 0.00 | 0.00 | 3.00 | 0.00 | 0.00 | 0.00 | 0.00 | 2.42 |
| Darocur 1173® | Ciba-Geigy | 2-Hydroxy-2-methyl-1-phenyl-1-propanone | α-Hydroxyketone | photoinitiator | 0.00 | 0.00 | 0.00 | 0.00 | 0.00 | 0.00 | 0.00 | 0.00 | 0.00 | 0.00 |
| | | | | Total | 100.00 | 100.00 | 100.00 | 100.00 | 100.00 | 80.62 | 80.62 | 80.62 | 80.62 | 80.62 |

| TABLE 2A - Composition for Examples 11 to 17 | | | | | | | | | | |
|---|---|---|---|---|---|---|---|---|---|---|
| | | | | Ex 11 | Ex 12 | Ex 13 | Ex 14 | Ex 15 | Ex 16 | Ex 17 |
| Trade Name | Supplier | Chemical Name/Class | Function | Amt(g) | Amt(g) | Amt(g) | Amt(g) | Amt(g) | Amt(g) | Amt(g) |
| Duracote 7® | Armstrong | Acrylated Urethane | resin | 48.50 | 48.50 | 48.50 | 47.00 | 47.00 | 47.00 | 47.00 |
| Genocure LTM ® | Rahn | Norrish Type II | photoinitiator | 1.50 | 0.00 | 0.00 | 0.00 | 0.00 | 0.00 | 0.00 |
| Genocure ITX ® | Rahn | Isopropylthioxanthone | photoinitiator | 0.00 | 1.50 | 0.00 | 1.50 | 0.00 | 1.50 | 0.00 |
| Genocure DETX ® | Rahn | 2,4-diethylthioxanthone | photoinitiator | 0.00 | 0.00 | 1.50 | 0.00 | 1.50 | 0.00 | 1.50 |
| Esacure EHA ® | Lamberti | 2-Ethylhexyl-4-dimethylamino benzoate | amine synergist | 0.00 | 0.00 | 0.00 | 1.50 | 1.50 | 0.00 | 0.00 |
| Esacure EDB ® | Lamberti | Ethyl 4-(dimethylamine) benzoate | amine synergist | 0.00 | 0.00 | 0.00 | 0.00 | 0.00 | 1.50 | 1.50 |
| | | | Total | 50.00 | 50.00 | 50.00 | 50.00 | 50.00 | 50.00 | 50.00 |
| | | | | | | | | | | |

| TABLE 2B - Composition for Examples 18 to 24 | | | | | | | | | | |
|---|---|---|---|---|---|---|---|---|---|---|
| | | | | Ex 18 | Ex 19 | Ex 20 | Ex 21 | Ex 22 | Ex 23 | Ex 24 |
| Trade Name | Supplier | Chemical Name/Class | Function | Amt(g) | Amt(g) | Amt(g) | Amt(g) | Amt(g) | Amt(g) | Amt(g) |
| Duracote 7 ® | Armstrong | Acrylated Urethane | resin | 49.25 | 49.25 | 47.75 | 47.75 | 47.75 | 47.75 | 48.5 |
| Genocure ITX ® | Rahn | Thioxanthone | photoinitiator | 0.75 | 0.00 | 0.75 | 0.00 | 0.75 | 0.00 | 0.00 |
| Genocure DETX ® | Rahn | Thioxanthone | photoinitiator | 0.00 | 0.75 | 0.00 | 0.75 | 0.00 | 0.75 | 0.00 |
| Esacure EHA ® | Lamberti | 2-Ethylhexyl-4-dimethylamino benzoate | amine synergist r | 0.00 | 0.00 | 1.50 | 1.50 | 0.00 | 0.00 | 0.00 |
| Esacure EDB ® | Lamberti | Ethyl 4-(dimethylamine) benzoate | amine synergist | 0.00 | 0.00 | 0.00 | 0.00 | 1.50 | 1.50 | 0.00 |
| Esacure 1001M ® | Lamberti | 1-[-(4-Bcnzoylphenylsulfanyl)-phenyl]-2-methyl-2-(4-methylphenylsulfonyl)propan-1-one | photoinitiator | 0.00 | 0.00 | 0.00 | 0.00 | 0.00 | 0.00 | 1.50 |
| | | | Total | 50.00 | 50.00 | 50.00 | 50.00 | 50.00 | 50.00 | 50.00 |

After the photoinitiators were dissolved, the viscosity of the samples was measured, as reflected in Table 3, in which examples 11, 12, 13, 14, and 24 were evaluated at multiple rpms. Viscosity measurements were conducted using a Brookfield® RVT, DVII viscometer, using a Brookfield® Thermosel heating mantle and a #21 spindle and chamber.

| TABLE 3 - Viscosity of Examples 1 to 24 | | | | |
|---|---|---|---|---|
| Example | Wt (g) | Viscosity (cPS) | RPM | Temp °C |
| 1 | 8.52 | 19,300 | 1 | 21 |
| 2 | 8.83 | 22,400 | 1 | 22 |
| 3 | 8.55 | 23,600 | 1 | 22 |
| 4 | 8.64 | 29,700 | 1 | 22 |
| 6 | 8.7 | 4,480 | 5 | 22 |
| 7 | 8.74 | 4,830 | 5 | 22 |
| 8 | 8.69 | 5,940 | 5 | 22 |
| 9 | 8.66 | 5,620 | 5 | 22 |
| 10 | 8.61 | 6,640 | 5 | 22 |
| 11 | 8.07 | 14,400 | 2.5 | 24 |
| | | 14,700 | 1 | 24 |
| 12 | 8.42 | 17,600 | 2.5 | 24 |
| | | 18,200 | 1 | 24 |
| 13 | 8.06 | 16,400 | 2.5 | 24 |
| | | 15,600 | 1 | 24 |
| 14 | 8.14 | 15,700 | 2.5 | 24 |
| | | 13,900 | 1 | 24 |
| 15 | 8.31 | 21,200 | 2.5 | 24 |
| 16 | 8.19 | 19,900 | 2.5 | 24 |
| 17 | 8.03 | 23,300 | 1 | 20 |
| 18 | 8.74 | 26,700 | 1 | 20 |
| 19 | 8.35 | 27,200 | 1 | 20 |
| 20 | 8.47 | 24,900 | 1 | 20 |
| 21 | 8.38 | 21,900 | 1 | 20 |
| 22 | 8.31 | 23,500 | 1 | 20 |
| 23 | 8.52 | 19,900 | 1 | 20 |
| 24 | 8.04 | 36,700 | 1 | 20 |
| | | 46,400 | 0.5 | 20 |

Each of the samples was coated on a 30.48 cm (12 in.) by 30.48 cm (12 in.) bio-based tile to a thickness of 0.00254 cm (1 mil) (0.001 in.) and then cured with a UVV LED. The bio-based tile was a non- PVC tile formed from a bio-based polyester and limestone composition of the type disclosed in U.S. Publication No. 2008/0081882A1.

All of examples 1 to 24 were cured using a Phoseon® Technology WCRX Starfire LED Quad having a specified wavelength of 380 to 420 nm and unit cure area of 1.905 cm (0.75 inch) by 30.48 cm (12 inch) employing 2W/cm² Water cooled UVV LEDs. The height of the LEDs from the coating surface was 0.476 cm (0.1875 in). The tiles were passed under the LEDs at a line speed of twelve feet per minute in an atmosphere of nitrogen having a volumetric flow rate often liters per minute. For examples 11-24, additional tile samples were cured at an increased line speed of twenty four feet per minute.

It will be appreciated that although the UVV LEDs emit most strongly in the UVV spectra, other UV spectra are also emitted. For purposes of clarity with reference to the energy density and peak irradiance data reflected in the tables, UVC refers to UV radiation having the strongest wavelengths between 200-280 nm; UVB refers to UV radiation having the strongest wavelengths between 280-315 nm; and UVA refers to UV radiation having the strongest wavelengths between 315-400 nm. UVV, as previously discussed, refers to UV radiation having the strongest wavelengths between 400-450 nm.

Energy density in (in mJ/cm²) and peak irradiance (in mW/cm²) were measured at the left edge, center and right edge of the tile; the curing temperature of each was also measured using an EIT UV PowerMap® radiometer. The results are reflected in Tables 4A and 4B. Except as otherwise identified, measurements for radiation density and peak· irradiance were taken approximately along a center line of the tile.

| TABLE 4A | | | | | | | | | | |
|---|---|---|---|---|---|---|---|---|---|---|
| Examples 1 to 10 | | | | | | | | | | |
| | Energy Density, mJ/cm² | | | | Peak Irradiance, mW/cm² | | | | Temperature, °C | |
| total | UVC | UVB | UVA | UVV | UVC | UVB | UVA | UVV | Peak | Average |
| Left Edge | 0 | 3.901 | 76.995 | 1471.7 | 0.691 | 3.336 | 85.585 | 2123.7 | 27 | 26 |
| Center | 0 | 7.424 | 105.060 | 14414.2 | 0.075 | 7.276 | 203.230 | 2051.3 | 27 | 25 |
| Right Edge | 0 | 1.817 | 73.062 | 1561.6 | 0.867 | 5.520 | 147.000 | 2489.6 | 28 | 26 |

| TABLE 4B | | | | | | | | | |
|---|---|---|---|---|---|---|---|---|---|
| LED UV Curing Conditions - Examples 11 to 24 | | | | | | | | | |
| Line Speed: 12 FPM | | | | | | | | | |
| Energy Density, mJ/cm² | | | | Peak Irradiance, mW/cm² | | | | Temperature, °C | |
| UVC | | UVA | UVV | UVC | UVB | UVA | UVV | Peak | Average |
| 0 | 4.301 | 99.438 | 1440.4 | 0.743 | | 185.820 | 2230.2 | 26 | 25 |
| | | | | | | | | | |

| Line Speed: 24 FPM | | | | | | | | | |
|---|---|---|---|---|---|---|---|---|---|
| Energy Density, mJ/cm² | | | | Peak Irradiance, mW/cm² | | | | Temperature, °C | |
| UVC | | UVA | UVV | UVC | UVB | UVA | UVV | Peak | Average |
| 0 | 2.031 | 48.852 | 737.11 | 0.701 | 6.383 | 177.820 | 2233.2 | 26 | 25 |

The tiles containing the cured sample coating formulations were then subjected to certain performance tests, the results of which are reflected in Table 5. Examples 11-23 each reflect A and B versions, which refer to the two different line speeds at which these exemplary formulations were cured (A = 12 FPM and B = 24 FPM), and thus were exposed to a different energy density per pass during curing. Table 5 further reflects that some samples were passed multiple times under the UVV source, and the total exposure experienced as a result was additive.

Gloss 60° was measured with a portable glossmeter, BYK Gardner Micro-TRI-Gloss^{®}.Ten measurements were taken in the machine direction and ten measurements were taken in the across-machine direction. The value reported in table 5 is an average based on all twenty measurements.

Adhesion was measured according to the protocol set forth in ASTM D3359-02. The results were evaluated and assigned numerical ratings based on the following criteria established by the standard:
5B = 100% adhesion was retained
4B = Some flaking evident at the intersections, but less than 5% of area affected
3B = Flaking along edges and at intersections, the area affected is from 5% to 15%
2B = Flaking along edges and on parts of the squares affecting from 15% to 35%
IB = Ribbons and whole squares were removed in an area from 35% to 65%
0B = Flaking and detachment was greater than 65% of the area of the Crosshatch.

Values for Gloss Retention refer to an accelerated abrasion resistance test, as described in U.S. Patent 5,843,576, in which sample specimens were laid under a leather clad traffic wheel which traveled in a circular motion, with the wheel rotating on its own axle. Abrasive soils were applied on top of the specimens while the wheel traveled in the circular motion on top of them. After a duration of 90 minutes, retention of gloss was determined for the specimens using a gloss meter. Higher gloss retention indicated better abrasion resistance. Results for 1 IB, 12B, 18B and 19B were not obtained, as all remained tacky even after the cure.

| TABLE 5 - Performance Testing | | | | | | |
|---|---|---|---|---|---|---|
| Ex | Joules per Pass | No. of Passes | Total UV Joules | Gloss 60° | Adhesion | Traffic Wheel Gloss Retained %, 90 min. |
| 1 | 1.5 | 1 | 15 | 85.6 | 4B | 23 |
| 2 | 1.5 | 1 | 1.5 | 84.3 | 5B | 45 |
| 3 | 1.5 | 1 | 1.5 | 76.5 | 3B | 88 |
| 4 | 1.5 | 1 | 1.5 | 86.9 | 4B | 87 |
| 5 | 1.5 | 1 | 1.5 | 89.0 | 3B | 86 |
| 6 | 1.5 | 2 | 3 | 78.9 | 3B | 9 |
| 7 | 1.5 | 6 | 9 | 79.7 | 3B | 13 |
| 8 | 1.5 | 1 | 1.5 | 79.5 | 4B | 15 |
| 9 | 1.5 | 1 | 1.5 | 75.7 | 3B | 18 |
| 10 | 1.5 | 1 | 1.5 | 76.4 | 3B | 33 |
| 11A | 1.4 | 1 | 1.4 | 75.2 | 4B | 88 |
| 11B | 0.74 | 1 | 0.74 | 82.4 | 4B | |
| 12A | 1.4 | 1 | 1.4 | 77.1 | 3B | 93 |
| 12B | 0.74 | 1 | 0.74 | 85.1 | 3B | |
| 13A | 1.4 | 1 | 1.4 | 83.5 | 3B | 75 |
| 13B | 0.74 | 1 | 0.74 | 86.4 | 4B | 60 |
| 14A | 1.4 | 1 | 1.4 | 88.2 | 4B | 72 |
| 14B | 0.74 | 1 | 0.74 | 87.8 | 3B | 56 |
| 15A | 1.4 | 1 | 1.4 | 82.0 | 3B | 80 |
| 15B | 0.74 | 1 | 0.74 | 88.0 | 4B | 77 |
| 16A | 1.4 | 1 | 1.4 | 89.5 | 4B | 81 |
| 17A | 1.4 | 1 | 1.4 | 87.8 | 4B | 44 |
| 18A | 1.4 | 1 | 1.4 | 88.3 | 3B/4B | 82 |
| 18B | 0.74 | 1 | 0.74 | 84.7 | 4B | |
| 19A | 1.4 | 1 | 1.4 | 84.8 | 4B | 76 |
| 19B | 0.74 | 1 | 0.74 | 51.7 | 2B | |
| 20A | 1.4 | 1 | 1.4 | 87.2 | 2B | 75 |
| 20B | 0.74 | 1 | 0.74 | 89.9 | 4B | 64 |
| 21A | 1.4 | 1 | 1.4 | 88.2 | 2B | 82 |
| 21B | 0.74 | 1 | 0.74 | 89.3 | 4B | 62 |
| 22A | 1.4 | 1 | 1.4 | 89.9 | 4B | 75 |
| 22B | 0.74 | 1 | 0.74 | 89.4 | 4B | 74 |
| 23A | 1.4 | 1 | 1.4 | 88.9 | 4B | 72 |
| 23B | 0.74 | 1 | 0.74 | 91.5 | 4B | 58 |

### EXAMPLES 25 to 31

The formulations shown in Table 6 were prepared as coating compositions to be cured using UVV LEDs, including examples 30 and 31 which demonstrate green embodiments in which the composition is a biobased polyol crosslinking compound (Polyol-5 in Table 1 A) in combination with an epoxide resin. For each case, all of the identified ingredients were added in a small brown glass jar and mixed at 54 °C (130°F) with high sped agitation until the photoinitiator was dissolved. At that point, a flattening agent was slowly added and stirred at high rpm for at least 15 minutes. Thereafter, the viscosity of the samples was measured.

| TABLE 6 | | | | | | | | | | | |
|---|---|---|---|---|---|---|---|---|---|---|---|
| | | | | | | | | | | | |

| | | | | | Ex 25 | Ex 26 | Ex 27 | Ex 28 | Ex 29 | Ex 30 | Ex 31 |
|---|---|---|---|---|---|---|---|---|---|---|---|
| Trade Name | Supplier | Chemical Name | Chemical Class | Function | Amt(g) | Amp(g) | Amp(g) | Amt(g) | Amt(g) | Amt(g) | Amt(g) |
| Duracote 7 ® | Armstrong | Acrylated Urethane | | resin | 267.00 | 267.00 | | 178.00 | 178.00 | | |
| Ex 25 | | | | resin | | | 200.00 | | | | |
| Polyol-5 | Armstrong | 54 wt % bio-based succinic acid, 46 wt % biobased 1,3-propanediol | Biobased polyester polyol | crosslinker | | | | | | 12.5 | 12.5 |
| Syna_Epoxy 21 ® | Synasia | 3,4-epoxy cyclohexyl methyl-3,4 epoxy cyclohexane carboxylate | | resin | | | | | | 50.00 | 50.00 |
| Silwet L-7200 ® | | | | surfactant | | | | | | 0.156 | 0.156 |
| Irgacure 819 ® | Ciba-Geigy | Phosphine oxide, phenyl bis (2,4,6-trimethyl benzoyl) | Bis Acyl Phosphine | photoinitiator | 9.00 | 9.00 | | | | | |
| Esacure KTO-46 ® | Lamberti | Mixture of phosphine oxide, Esacure KIP150 and Esacure TZT | Acylphosphinc oxide based | photoinitiator | | | | 6.00 | | | |
| Lucirin® TPO ® | BASF | 2,4,6-trimethylbenzoyldiphenyl phosphine oxide | Mono Acyl Phosphine | photoinitiator | | | | | 6.00 | | |
| Genocure ITX ® | Rahn | Isopropylthioxanthone | | photosensitizer | | | | | | 0.313 | |
| Genocure DETX ® | Rahn | 2,4-diethyl thioxanthone | | photosensitizer | | | | | | | 0.313 |
| Esacure 1064 ® | Lamberti | Arylsulfonium hexafluoro-phosphate | | photoinitiator | | | | | | 3.75 | 3.75 |
| Micropro 400 ® | MicroPowders | Polypropylene wax | | fatting agent | 24.00 | 0.00 | 9.09 | | | | |
| Gasil UV70C ® | Ineos Silicas | Silicas | | flatting agent | 0.00 | 24.00 | | 16.00 | 16.00 | 5.3375 | 5.3375 |
| | | | | Total | 300.00 | 300.00 | 209.09 | 200.00 | 200.00 | 72.06 | 72.06 |

Examples 25 to 31 were also applied to a thickness of 1 mil on the same type of bio-based tile as previously discussed and likewise were cured using a Phoseon Technology WCRX Starfire LED Quad having a specified wavelength of 380 to 420 nm and unit cure area was 1.905 cm (0.75 in.) by 30.48 cm (12 in.) employing 2W/cm² water cooled UVV LEDs. The height of the LEDs from the coating surface was varied between 0.476 cm (0.1875 in), 0.7937 cm (0.3125 in.) and 2.54 cm (1 in.), and in some cases 1.905 cm (0.75 in). was also used.

The atmosphere was also varied, in which some passes were conducted in a static air environment, while others were conducted in a nitrogen atmosphere with a volumetric flow rate often liters per minute. The substrate temperature was also varied at the time of curing, as reflected in the following tables (in which RT refers to room temperature).

Table 8A illustrates the energy density, peak irradiance and curing temperature at different heights from the LED to the coating surface, while Tables 8B, 9A and 9B show conditions under which each of a first and second pass of UVV LED exposure was conducted, as well as performance testing results for Gloss 60° following the second pass. Each of examples 30B, 30C, 3 IB and 31C achieved 100% adhesion in the 2 passes prior to performance testing. Example 30E was subjected to 5 passes of UVV LED exposure prior to performance testing.

The performance testing demonstrates that gloss can be controlled by curing temperature and LED peak irradiance using the same composition.

| TABLE 8A - LED UV Curing Conditions - Examples 25 and 26 | | | | | | | | | |
|---|---|---|---|---|---|---|---|---|---|
| | | | | | | | | | |

| Height (from Coating Surface to LED): 3/16" (4.76mm (center point)) | | | | | | | | | |
|---|---|---|---|---|---|---|---|---|---|
| Energy Density, mJ/cm² | | | | Peak Irradiance, mW/cm² | | | | Temperature, °C | |
| UVC | UVB | UVA | UVV | UVC | UVB | UVA | UVV | Peak | Average |
| 0 | 2.041 | 96.197 | 1428.2 | 0.727 | 6.886 | 204.370 | 2161.2 | 28 | 27 |
| | | | | | | | | | |

| Height (from Coating Surface to LED): 5/16" (7.94mm (center point)) | | | | | | | | | |
|---|---|---|---|---|---|---|---|---|---|
| Energy Density, mJ/cm² | | | | Peak Irradiance, m W/cm² | | | | Temperature, °C | |
| UVC | UVB | UVA | UVV | UVC | UVB | UVA | UVV | Peak | Average |
| 0 | 0.000 | 89.440 | 1365.7 | 0.676 | 5.765 | 166.570 | 1789.5 | 29 | 27 |
| | | | | | | | | | |

| Height (from Coating Surface to LED): 1" (25.4mm (center point)) | | | | | | | | | |
|---|---|---|---|---|---|---|---|---|---|
| Energy Density, mJ/cm² | | | | Peak Irradiance, mW/cm² | | | | Temperature, °C | |
| UVC | UVB | UVA | UVV | UVC | UVB | UVA | UVV | Peak | Average |
| 0 | 0.000 | 82.178 | 1326.5 | 0.245 | 2.735 | 87.254 | 938.92 | 29 | 28 |

| TABLE 8B | | | | | | | | | |
|---|---|---|---|---|---|---|---|---|---|
| | 1st Pass | | | | | | | | |
| Example | Joules per Pass | No. of Passes | Total UV Joules | Line Speed FPM | Amorphous | Distance from Coating Surface, cm (in.) | Substrate Temp, °C (°F) | Tacky | |
| 26A | 1.43 | 1 | 1.43 | 12 | air | 0.476 (3/16) | 23.33 (74) | Yes | |
| 26B | 1.43 | 1 | 1.43 | 12 | air | 0.476 (3/16) | 54 (129) | Yes | |
| 26C | 1.37 | 1 | 1.37 | 12 | air | 0.793 (5/16) | 60 (140) | Yes | |
| 26D | 1.33 | 1 | 1.33 | 12 | air | 2.54 (1) | 55.5 (133) | Yes | |
| 26E | n/a | 0 | n/a | n/a | n/a | n/a | n/a | n/a | |
| 26F | n/a | 0 | n/a | n/a | n/a | n/a | n/a | n/a | |
| 26G | 1.33 | 1 | 1.33 | 12 | air | 2.54 (1) | 61 (142) | Yes | |
| | | | | | | | | | |

| | 2nd Pass | | | | | | | | |
|---|---|---|---|---|---|---|---|---|---|
| Example | Joules per Pass | No. of Passes | Total UV Joules | Line Speed FPM | Amorphous | Distance from Coating Surface, cm (in.) | Substrate Temp, °C (°F) | Tacky | Gloss 60° ave 6 readings |
| 26A | 1.43 | 1 | 1.43 | 12 | N2 | 0.476 (3/16) | 23.3 (74) | No | 73 |
| 26B | 1.43 | 1 | 1.43 | 12 | N2 | 0.476 (3/16) | 23.3 (74) | No | 68 |
| 26C | 1.43 | 1 | 1.43 | 12 | N2 | 0.476 (3/16) | 23.3 (74) | No | 59 |
| 26D | 1.43 | 1 | 1.43 | 12 | N2 | 0.476 (3/16) | 23.3 (74) | No | 56 |
| 26E | 1.43 | 1 | 1.43 | 12 | N2 | 0.476 (3/16) | 23.3 (74) | No | 77 |
| 26F | 1.43 | 1 | 1.43 | 12 | N2 | 0.476 (3/16) | 55 (132) | No | 73 |
| 26G | 1.43 | 1 | 1.43 | 12 | N2 | 0.476 (3/16) | 23.3 (74) | No | 41 |

| TABLE 9A - LED UV Curing Conditions - Examples 26, 28, 29 30 and 31 | | | | | | | | |
|---|---|---|---|---|---|---|---|---|
| | 1st Pass | | | | | | | |
| Ex | UVA mW/cm² | UVA mJ/cm³ | UVV mW/cm² | UVV mJ/cm³ | Line Speed FPM | Atmosphere | Distance from Coating Surface, cm (in.) | Substrate Temp, °C (°F) |
| 26H | 204.4 | 101.2 | 2161.2 | 1433.7 | 12 | Air | 0.476 (3/16) | 21.1 (70) |
| 261 | 204.4 | 101.2 | 2161.2 | 1433.7 | 12 | Air | 0.476 (3/16) | 57 (135) |
| 26J | 166.6 | 96.7 | 1789.5 | 1375.9 | 12 | Air | 0.793 (5/16) | 60 (140) |
| 26K | 87.3 | 89.5 | 938.9 | 1334.3 | 12 | Air | 2.54 (1) | 55.5 (133) |
| 26L | -- | -- | -- | -- | -- | -- | -- | -- |
| 26M | -- | -- | -- | -- | -- | -- | -- | -- |
| 26N | 87.3 | 89.5 | 938.9 | 1334.3 | 12 | Air | 2.54 (1) | 61 (142) |
| 27A | 204.4 | 101.2 | 2161.2 | 1433.7 | 12 | Air | 0.476 (3/16) | 61.5 (143) |
| 27B | 166.0 | 96 | 1789 | 1375 | 12 | Air | 0.793 (5/16) | 64 (147) |
| 27C | 87.0 | 89 | 938 | 1334 | 12 | Air | 2.54 (1) | 66.5 (151) |
| 28A | 185.4 | 108.2 | 2027.4 | 1460.0 | 12 | Air | 0.476 (3/16) | 65.5 (149) |
| 28B | 185.4 | 108.2 | 2027.4 | 1460.0 | 12 | air | 0.476 (3/16) | 60(140) |
| 28C | 138.6 | 101.7 | 1551.0 | 1410.6 | 12 | air | 0.793 (5/16) | 61.5 (143) |
| 28D | 107.5 | 99.9 | 1126.6 | 1377.3 | 12 | air | 1.905 (3/4) | 61 (142) |
| 28E | 93.1 | 97.6 | 997.2 | 1381.1 | 12 | air | 2.54 (1) | 67 (152) |
| 28F | 138.6 | 101.7 | 1551.0 | 1410.6 | 12 | air | 0.793 (5/16) | 23.9 (75) |
| 28G | 185.4 | 108.2 | 2027.4 | 1460.0 | 12 | N2 | 0.476 (3/16) | 25.6 (78) |
| 28H | 185.4 | 108.2 | 2027.4 | 1460.0 | 12 | N2 | 0.476 (3/16) | 70.5 (159) |
| 281 | 138.6 | 101.7 | 1551.0 | 1410.6 | 12 | N2 | 0.793 (5/16) | 65.5 (148) |
| 28J | 107.5 | 99.9 | 1126.6 | 1377.3 | 12 | N2 | 1.905 (3/4) | 74 (165) |
| 28K | 93.1 | 97.6 | 997.2 | 1381.1 | 12 | N2 | 2.54 (1) | 71.5 (161) |
| 29A | 185.4 | 108.2 | 2027.4 | 1460.0 | 12 | air | 0.476 (3/16) | 61.5 (143) |
| 29B | 138.6 | 101.7 | 1551.0 | 1410.6 | 12 | air | 0.793 (5/16) | 68 (153) |
| 29C | 107.5 | 99.9 | 1126.6 | 1377.3 | 12 | air | 1.905 (3/4) | 66 (150) |
| 29D | 93.1 | 97.6 | 997.2 | 1381.1 | 12 | air | 2.54 (1) | 67 (152) |
| 29E | 138.6 | 101.7 | 1551.0 | 1410.6 | 12 | air | 0.793 (5/16) | 23.9 (75) |
| 29F | 185.4 | 108.2 | 2027.4 | 1460.0 | 12 | air | 0.476 (3/16) | 26.1 (79) |
| 29G | 185.4 | 108.2 | 2027.4 | 1460.0 | 12 | N2 | 0.476 (3/16) | 74.5 (166) |
| 29H | 138.6 | 101.7 | 1551.0 | 1410.6 | 12 | N2 | 0.793 (5/16) | 66.5 (151) |
| 29I | 107.5 | 99.9 | 1126.6 | 1377.3 | 12 | N2 | 1.905 (3/4) | 73.5 (164) |
| 29J | 93.1 | 97.6 | 997.2 | 1381.1 | 12 | N2 | 2.54 (1) | 73.5 (164) |
| 30A | 204.4 | 101.2 | 2161.2 | 1433.7 | 12 | air | 0.476 (3/16) | 68.5 (154) |
| 30B | 177.0 | 91.3 | 2038.3 | 1387.6 | 12 | N2 | 0.476 (3/16) | RT |
| 30C | 177.0 | 91.3 | 2038.3 | 1387.6 | 12 | air | 0.476 (3/16) | RT |
| 30D | 204.4 | 101.2 | 2161.2 | 1433.7 | 12 | air | 0.476 (3/16) | 68.5 (154) |
| 30E | 199.6 | 96.4 | 1998.0 | 1320.0 | 12 | air | 0.476 (3/16) | 28.9 (84) |

| TABLE 9A (Cont.) - LED UV Curing Conditions - Examples 26, 28, 29 30 and 31 | | | | | | | | |
|---|---|---|---|---|---|---|---|---|
| | 1 st Pass | | | | | | | |
| Ex | mW/cm² | UVA mJ/cm³ | UVV mW/cm² | UVV mJ/cm³ | Speed FPM | Atmosphere | Distance from Coating Surface, cm (in) | Substate Temp, °C (°F) |
| 30F | 199.6 | 96.4 | 1998.0 | 1320.0 | 12 | air | 0.476 (3/16) | 74 (165) |
| 30G | 164.9 | 89.7 | 1684.0 | 1274.0 | 12 | air | 0.793 (5/16) | 69.5 (156) |
| 30H | 84.6 | 86.5 | 890.7 | 1251.0 | 12 | air | 2.54 (1) | 71.5 (161) |
| 31A | 204.4 | 101.2 | 2161.2 | 1433.7 | 12 | air | 0.476 (3/16) | 70.5 (159) |
| 31B | 177.0 | 91.3 | 2038.3 | 1387.6 | 12 | air | 0.476 (3/16) | RT |
| 31C | 177.0 | 91.3 | 2038.3 | 1387.6 | 12 | air | 0.476 (3/16) | RT |
| 31D | 204.4 | 101.2 | 2161.2 | 1433.7 | 12 | air | 0.476 (3/16) | 70.5 (159) |
| 31E | 199.6 | 96.4 | 1998.0 | 1320.0 | 12 | air | 0.476 (3/16) | 28.9 (84) |
| 31F | 199.6 | 96.4 | 1998.0 | 1320.0 | 12 | air | 0.476 (3/16) | 71.5 (161) |
| 31G | 164.9 | 89.7 | 1684.0 | 1274.0 | 12 | air | 0.793 (5/16) | 69 (155) |
| 31H | 84.6 | 86.5 | 890.7 | 1251.0 | 12 | air | 2.54 (1) | 74.5 (166) |

| TABLE 9B - LED UV Curing Conditions - Examples 26, 28, 29 30 and 31 | | | | | | | | | |
|---|---|---|---|---|---|---|---|---|---|
| | 2nd Pass | | | | | | | | |
| Ex | UVA mW/c m² | UVA mJ/c m³ | UVV mW/c m² | UVV mJ/cm³ | Line Speed FPM | Atmosphere | Distance from Coating Surface, cm (in) | Substrate Temp, °C (°F) | Gloss 60° |
| 26H | 204.4 | 101.2 | 2161.2 | 1433.7 | 12 | N2 | 0.476 (3/16) | RT | 72.5 |
| 26I | 204.4 | 101.2 | 2161.2 | 1433.7 | 12 | N2 | 0.476 (3/16) | RT | 67.0 |
| 26J | 204.4 | 101.2 | 2161.2 | 1433.7 | 12 | N2 | 0.476 (3/16) | RT | 59.0 |
| 26K | 204.4 | 101.2 | 2161.2 | 1433.7 | 12 | N2 | 0.476 (3/16) | RT | 56.0 |
| 26L | 204.4 | 101.2 | 2161.2 | 1433.7 | 12 | N2 | 0.476 (3/16) | RT | 77.0 |
| 26M | 204.4 | 101.2 | 2161.2 | 1433.7 | 12 | N2 | 0.476 (3/16) | RT | 73.0 |
| 26N | 204.4 | 101.2 | 2161.2 | 1433.7 | 12 | N2 | 0.476 (3/16) | RT | 41.0 |
| 27A | 204.4 | 101.2 | 2161.2 | 1433.7 | 12 | N2 | 0.476 (3/16) | RT | 69.2 |
| 27B | 204.4 | 101.2 | 2161.2 | 1433.7 | 12 | N2 | 0.476 (3/16) | RT | 64 |
| 27C | 204.4 | 101.2 | 2161.2 | 1433.7 | 12 | N2 | 0.476 (3/16) | RT | 62 |
| 28A | 185.4 | 108.2 | 2027.4 | 1460 | 12 | N2 | 0.476 (3/16) | RT | 57.9 |
| 28B | 185.4 | 108.2 | 2027:4 | 1460 | 12 | N2 | 0.476 (3/16) | RT | 58.6 |
| 28C | 185.4 | 108.2 | 2027.4 | 1460 | 12 | N2 | 0.476 (3/16) | RT | 53.8 |
| 28D | 185.4 | 108.2 | 2027.4 | 1460 | 12 | N2 | 0.476 (3/16) | RT | 43.8 |
| 28E | 185.4 | 108.2 | 2027.4 | 1460 | 12 | N2 | 0.476 (3/16) | RT | 42.5 |
| 28F | 185.4 | 108.2 | 2027.4 | 1460 | 12 | N2 | 0.476 (3/16) | RT | 80.6 |
| 28G | 185.4 | 108.2 | 2027.4 | 1460 | 12 | N2 | 0.476 (3/16) | RT | 77.9 |
| 28H | 185.4 | 108.2 | 2027.4 | 1460 | 12 | N2 | 0:476 (3/16) | RT | 67.6 |
| 28I | 185.4 | 108.2 | 2027.4 | 1460 | 12 | N2 | 0.476(3/16) | RT | 70.0 |
| 28J | 185.4 | 108.2 | 2027.4 | 1460 | 12 | N2 | 0.476 (3/16) | RT | 34.1 |
| 28K | 185.4 | 108.2 | 2027.4 | 1460 | 12 | N2.. | 0.476 (3/16) | RT | 26.0 |
| 29A | 185.4 | 108.2 | 2027.4 | 1460 | 12 | N2 | 0.476 (3/16) | RT | 64.9 |
| 29B | 185.4 | 108.2 | 2027.4 | 1460 | 12 | N2 | 0.476 (3/16) | RT | 54.8 |
| 29C | 185.4 | 108.2 | 2027.4 | 1460 | 12 | N2 | 0.476 (3/16) | RT | 44.4 |
| 29D | 185.4 | 108.2 | 2027.4 | 1460 | 12 | N2 | 0.476 (3/16) | RT | 39.0 |
| 29E | 185.4 | 108.2 | 2027.4 | 1460 | 12 | N2 | 0.476 (3/16) | RT | 78.1 |
| 29F | 185.4 | 108.2 | 2027.4 | 1460 | 12 | N2 | 0.476 (3/16) | RT | 78.6 |
| 29G | 185.4 | 108.2 | 2027.4 | 1460 | 12 | N2 | 0.476 (3/16) | RT | 70.2 |
| 29H | 185.4 | 108.2 | 2027.4 | 1460 | 12 | N2 | 0.476 (3/16) | RT | 62.0 |
| 29I | 185.4 | 108.2 | 2027.4 | 1460 | 12 | N2 | 0.476 (3/16) | RT | 33.0 |
| 29J | 185.4 | 108.2 | 2027.4 | 1460 | 12 | N2 | 0.476 (3/16) | RT | 27.8 |
| 30A | 204.4 | 101.2 | 2161.2 | 1433.7 | 12 | N2 | 0.476 (3/16) | RT | 74.5 |
| 30B | 177 | 91.3 | 2038.3 | 1387.6 | 12 | N2 | 0.476 (3/16) | RT | 88.2 |
| 30C | 177 | 91.3 | 2038.3 | 1387.6 | 12 | air | 0.476 (3/16) | RT | 90.9 |
| 30D | 204.4 | 101.2 | 2161.2 | 1433.7 | 12 | N2 | 0.476 (3/16) | 68.5 (154) | 74.5 |
| 30E | 199.6 | 96.4 | 1998.0 | 1320.0 | 12 | N2 | 0.476 (3/16) | 28.9 (84) | 84.8 |
| 30F | 199.6 | 96.4 | 1998.0 | 1320.0 | 12 | N2 | 0.476 (3/16) | 74 (165) | 67.7 |

| TABLE 9B (Cont) - LED UV Curing Conditions - Examples 26, 28, 29 30 and 31 | | | | | | | | | |
|---|---|---|---|---|---|---|---|---|---|
| | 2nd Pass | | | | | | | | |
| Ex | UVA mW/c m² | UVA mJ/c m³ | UVV mW/c m² | UVV mJ/cm³ | Line Speed FPM | Atmosphere | Distance from Coating Surface, cm (in) | Substrate Temp, °C (°F) | Gloss 60° |
| 30G | 164.9 | 89.7 | 1684.0 | 1 74.0 | 12 | N2 | 0.793 (5/16) | 69.5 (156) | 63.3 |
| 30H | 84.6 | 86.5 | 890.7 | 1251.0 | 12 | N2 | 2.54 (1) | 71.5 (161) | 64.2 |
| 31A | 204.4 | 101.2 | 2161.2 | 1433.7 | 12 | N2 | 0.476 (3/16) | RT | 81.4 |
| 31B | 177 | 91.3 | 2038.3 | 1387.6 | 12 | N2 | 0.476 (3/16) | RT | 85.8 |
| 31C | 177 | 91.3 | 2038.3 | 1387.6 | 12 | air | 0.476 (3/1.6) | RT | 86.7 |
| 31D | 204.4 | 101.2 | 2161.2 | 1433.7 | 12 | N2 | 0.476 (3/16) | 70.5 (159) | 81.4 |
| 31E | 199.6 | 96.4 | 1998.0 | 1320.0 | 12 | N2 | 0.476 (3/16) | 28.9 (84) | 83.4 |
| 31F | 199.6 | 96.4 | 1998.0 | 1320.0 | 12 | N2 | 0.476 (3/16) | 71.5 (161) | 73.2 |
| 31G | 164.9 | 89.7 | 1684.0 | 1274.0 | 12 | N2 | 0.793 (5/16) | 69 (155) | 79.7 |
| 31H | 84.6 | 86.5 | 890.7 | 1251.0 | 12 | N2 | 2.54 (1) | 74.5 (166) | 75.7 |

## Claims

1. A method of making a coated substrate comprising:
coating the substrate with a coating composition, wherein the composition comprises
(a) a resin,
(b) a cationic type photoinitiator, and
(c) a polyol cross-linker,
the composition being curable by radiation having the strongest wavelength in the UVV range of 400 to 450 nm; and curing the coating by passing the coated substrate under a bank or array of UVV light emitting diodes (LED) having the strongest wavelength in the UVV range of 400 to 450 nm.

2. The method of claim wherein the polyol cross-linker is a bio-based polyol cross-linker.

3. The method of claim 1, wherein the resin is selected from the group consisting of acrylated urethane resins, acrylated polyester resins, (meth)acrylate oligomers, (meth)acrylate monomers, N-vinyl amides, maleate esters, fumarate esters, epoxide resins, vinyl ethers, vinyl esters, allyl ethers, allyl esters, vinyl aromatics, maleimides and derivatives thereof, epoxy resins, propenyl ethers, oxetanes, lactones, thiols, unsaturated polyesters, unsaturated fatty acids, unsaturated oils, unsaturated waxes, and combinations thereof.

4. The method of claim 1, further comprising controlling the gloss of the coated substrate by controlling at least one factor selected from the group of factors consisting of (a) the amount of flatting agent in the composition applied to the surface, (b) the amount of power applied to the coated surface during curing and (c) the temperature of the coated surface during curing.

5. The method of claim 1, wherein the composition further comprises a UV activated photoinitiator.

6. The method of claim 1, wherein the substrate is flooring selected form the group consisting of sheet goods, tile, laminate, cork, bamboo, ceramic, engineered wood and solid wood, and a film, wherein the film is laminated to the flooring after the step of curing the coating.

7. A UVV curable composition comprising
(a) a resin,
(b) a cationic type photoinitiator, and
(c) a polyol cross-linker;
wherein the resin is selected from the group consisting of acrylated urethane resin, an acrylated polyester resin, vinyl ethers, epoxide resin, and combinations thereof, wherein the composition is curable under a bank or array of UVV light emitting diode (LED) radiation having the strongest wavelength in the UVV range of 400 to 450 nm.

8. The UVV curable composition of claim 7, wherein the composition further comprises an amine synergist.

9. The UVV curable composition of claim 7, wherein the cationic type photoinitiator is an iodonium salt or a sulfonium salt and the composition further comprises a photosensitizer which is selected from the group consisting of isopropyl thioxanthone, 1-chloro-4-propoxy-thioxanthone, 2,4-diethylthioxanthone and 2-chlorothioxanthone.

10. The UVV curable composition of claim 7, wherein the resin is an acrylated urethane resin derived from a vegetable oil polyol reactant and a trimethylol propane triacrylate diluent, wherein the vegetable oil polyol reactant is selected from the group consisting of castor oil polyol and soya oil polyol.

11. A floor covering comprising a UVV curable composition, comprising (a) a resin selected from the group consisting of an acrylated urethane resin, an acrylated polyester resin, and combinations thereof, (b) a cationic type photoinitiator, and (c) a bio-based polyol cross-linker, wherein the composition is curable under a bank or array of UVV light emitting diode (LED) radiation having the strongest wavelength in the UVV range of 400 to 450 nm.

12. The floor covering of claim 11, wherein the cationic type photo initiator is an iodonium salt or a sulfonium salt.

13. The floor covering of claim 12, wherein the composition comprises an amine synergist.

14. The floor covering of claim 12, wherein the composition further comprises a photosensitizer, wherein the photosensitizer is selected from the group consisting of isopropyl thioxanthone, 1-chloro-4-propoxy-thioxanthone, 2,4-diethylthioxanthone and 2-chlorothioxanthone.

15. The floor covering of claim 11, wherein the resin is an acrylated urethane resin derived from a vegetable oil polyol and a trimethylol propane triacrylate diluent, wherein the vegetable oil polyol is selected from the group consisting of castor oil polyol and soya oil polyol and wherein the trimethylol propane triacrylate diluent is ethoxylated.

16. A seam sealer tool comprising a frame; a container secured to the frame, the container containing a curable composition according to claim 7 and the container having an applicator to apply the composition to a substrate surface by an applicator, the composition comprising a resin, a cationic type photoinitiator and a polyol cross-linker; a lamp assembly secured to the frame, the lamp assembly having a bank or array of UVV light emitting diode (LED) radiation source to cure the applied curable composition on the substrate surface; and a travel mechanism comprising at least one roller, the travel mechanism configured to maintain a constant height of the lamp assembly from the substrate surface during use of the tool.

17. The seam sealer tool of claim 16, wherein the height of the UVV LED radiation source can be adjusted from the substrate surface.

## Patentansprüche

1. Verfahren zur Herstellung eines beschichteten Substrats, umfassend:
die Beschichtung des Substrats mit einer Beschichtungszusammensetzung, die
(a) ein Harz,
(b) einen Photoinitiator vom kationischen Typ und
(c) einen Polyolvernetzer umfasst,
wobei die Zusammensetzung durch Bestrahlung mit der stärksten Wellenlänge im UV-Bereich von 400 - 450 nm härtbar ist, und die Härtung der Beschichtung durch Passage des beschichteten Substrats unter einer Bank bzw. einer Anordnung von UV-Licht emittierenden Dioden (LED) mit der stärksten Wellenlänge im UV-Bereich von 400 - 450 nm.

2. Verfahren nach Anspruch 1, wobei der Polyolvernetzer ein Polyolvernetzer auf biologischer Basis ist.

3. Verfahren nach Anspruch 1, wobei das Harz ausgewählt wird aus der Gruppe, bestehend aus Acrylurethanharzen, Acrylpolyesterharzen, (Meth)acrylatoligomeren, (Meth)acrylatmonomeren, N-Vinylamiden, Maleatestern, Fumaratestern, Epoxidharzen, Vinylethern, Vinylestern, Allylethern, Allylestern, Vinylaromaten, Maleimiden und ihren Derivaten, Epoxyharzen, Propenylethern, Oxetanen, Lactonen, Thiolen, ungesättigten Polyestern, ungesättigten Fettsäuren, ungesättigten Ölen, ungesättigten Wachsen und Gemischen davon.

4. Verfahren nach Anspruch 1, das außerdem noch die Steuerung des Glanzes des beschichteten Substrats durch Steuerung wenigstens eines Faktors, ausgewählt aus der Gruppe, von Faktoren, bestehend aus
(a) der Menge an Mattierungsmittel in der auf die Oberfläche aufgebrachten Zusammensetzung,
(b) der Menge des auf die beschichtete Oberfläche während der Härtung aufgebrachten Pulvers und
(c) der Temperatur der beschichteten Oberfläche während der Härtung.

5. Verfahren nach Anspruch 1, wobei die Zusammensetzung außerdem noch einen UVaktivierten Photoinitiator umfasst.

6. Verfahren nach Anspruch 1, wobei das Substrat ein Bodenbelag ist, ausgewählt aus der Gruppe, bestehend aus Folien, Fliesen, Laminat, Kork, Bambus, Keramik, verarbeitetem Holz und festem Holz, und einen Film darstellt, wobei dieser auf den Bodenbelag nach der Stufe der Härtung der Beschichtung auflaminiert wird.

7. UV-härtbare Zusammensetzung, umfassend
(a) ein Harz,
(b) einen Photoinitiator vom kationischen Typ und
(c) einen Polyolvernetzer,
wobei das Harz ausgewählt wird aus der Gruppe, bestehend aus Acrylurethanharz, einem Acrylpolyesterharz, Vinylethern, Epoxidharz und Gemischen davon, wobei die Zusammensetzung härtbar ist unter einer Bank bzw. einer Anordnung von UV-Licht emittierenden Dioden (LED) als Strahlungsquelle mit der stärksten Wellenlänge im UV-Bereich von 400 - 450 nm.

8. UV-härtbare Zusammensetzung nach Anspruch 7, wobei die Zusammensetzung außerdem noch einen Aminsynergisten umfasst.

9. UV-härtbare Zusammensetzung nach Anspruch 7, wobei der Photoinitiator vom kationischen Typ ein Iodoniumsalz ist und die Zusammensetzung außerdem noch einen Photosensibilisator umfasst, ausgewählt aus der Gruppe, bestehend aus Isopropylthioxanthon, 1-Chlor-4-propoxy-thioxanthon, 2,4-Diethylthioxanthon und 2-Chlorthioxanthon.

10. UV-härtbare Zusammensetzung nach Anspruch 7, wobei das Harz ein Acrylurethanharz ist, gewonnen aus einem Pflanzenöl-Polyolreaktanten und einem Trimethylolpropantriacrylat-Verdünnungsmittel, wobei der Pflanzenöl-Polyolreaktant ausgewählt ist aus der Gruppe, bestehend aus Castorölpolyol und Sojaölpolyol.

11. Bodenbelag, umfassend eine UV-härbare Zusammensetzung, umfassend
(a) ein Harz, ausgewählt aus der Gruppe, bestehend aus einem Acrylurethanharz, einem Acrylpolyesterharz und Gemischen davon,
(b) einem Photoinitiator vom kationischen Typ, und
(c) einem Polyolvernetzer auf biologischer Basis, wobei die Zusammensetzung härtbar ist unter einer Bank bzw. einer Anordnung von UV-Licht emittierenden Dioden (LED) als Strahlungsquelle mit der stärksten Wellenlänge im UV-Bereich von 400 - 450 nm.

12. Bodenbelag nach Anspruch 11, wobei der Photoinitiator vom kationischen Typ ein Iodoniumsalz oder ein Sulfoniumsalz ist.

13. Bodenbelag nach Anspruch 12, wobei die Zusammensetzung einen Aminsynergisten umfasst.

14. Bodenbelag nach Anspruch 12, wobei die Zusammensetzung außerdem noch einen Photosensibilisator umfasst, ausgewählt aus der Gruppe, bestehend aus Isopropylthioxanthon, 1-Chlor-4-propoxy-thioxanthon, 2,4-Diethylthioxanthon und 2-Chlorthioxanthon.

15. Bodenbelag nach Anspruch 11, wobei das Harz ein Acrylurethanharz ist, gewonnen aus einem Pflanzenöl-Polyol und einem Trimethylolpropantriacrylat-Verdünnungsmittel, wobei das Pflanzenöl-Polyol ausgewählt ist aus der Gruppe, bestehend aus Castorölpolyol und Sojaölpolyol, und wobei das Trimethylolpropantriacrylat-Verdünnungsmittel ethoxiliert ist.

16. Fugenabdichtwerkzeug, umfassend einen Rahmen,
einen am Rahmen befestigten Behälter, der eine härtbare Zusammensetzung gemäß Anspruch 7 enthält und einen Applikator zur Auftragung der Zusammensetzung auf eine Substratoberfläche durch den Applikator aufweist, wobei die Zusammensetzung ein Harz, einen Photoinitiator vom kationischen Typ und einen Polyolvernetzer umfasst,
eine am Rahmen befestigte Lampenanordnung, die eine Bank oder eine Anordnung von UV-Licht emittierenden Dioden (LED) als Strahlungsquelle zur Härtung der aufgebrachten härtbaren Zusammensetzung auf der Substratoberfläche,
und eine Fahrvorrichtung, die ihrerseits wenigstens eine Laufrolle umfasst und so konfiguriert ist, dass während des Einsatzes des Werkzeugs eine konstante Höhe der Lampenanordnung über der Substratoberfläche eingehalten wird.

17. Fugenabdichtwerkzeug nach Anspruch 16, wobei die Höhe der UV-LED-Strahlungsquelle über der Substratoberfläche eingestellt werden kann.

## Revendications

1. Procédé de préparation d'un substrat revêtu, comprenant le fait de :
revêtir le substrat d'une composition de revêtement, la composition comprenant :
(a) une résine ;
(b) un photoinitiateur de type cationique ; et
(c) un agent de réticulation de type polyol ;
la composition étant durcissable par exposition à un rayonnement dont la longueur d'onde la plus forte se situe dans la gamme des UVV de 400 à 450 nm ; et
durcir le revêtement en faisant passer le substrat revêtu en dessous d'un banc ou d'un réseau de diodes électroluminescentes (LED) émettant des UVV dont la longueur d'onde la plus forte se situe dans la gamme des UVV de 400 à 450 nm.

2. Procédé selon la revendication 1, dans lequel l'agent de réticulation de type polyol est un agent de réticulation de type polyol biosourcé.

3. Procédé selon la revendication 1, dans lequel la résine est choisie parmi le groupe constitué par des résines acryliques à base d'uréthane, des résines acryliques à base de polyester, des oligomères de (méth)acrylates, des monomères de (méth)acrylates, des N-vinylamides, des esters maléates, des esters fumarates, des résines époxydes, des éthers vinyliques, des esters vinyliques, des éthers allyliques, des esters allyliques, des composés vinylaromatiques, des maléimides et leurs dérivés, des résines époxy, des éthers propényliques, des oxétanes, des lactones, des thiols, des polyesters insaturés, des acides gras insaturés, des huiles insaturées, des cires insaturées, et leurs combinaisons.

4. Procédé selon la revendication 1, comprenant en outre le réglage du brillant du substrat revêtu en réglant au moins un facteur choisi parmi le groupe de facteurs constitué par : (a) la quantité de l'agent de matité dans la composition appliquée à la surface ; (b) la quantité de puissance appliquée à la surface enduite lors du durcissement ; et (c) la température de la surface enduite lors du durcissement.

5. Procédé selon la revendication 1, dans lequel la composition comprend en outre un photoinitiateur activé par ultraviolet.

6. Procédé selon la revendication 1, le substrat est un couvre-sol choisi parmi le groupe constitué par un revêtement en feuilles, une dalle, un stratifié, du liège, du bambou, de la céramique, du bois composite et du bois massif, et un film, le film étant contrecollé au couvre-sol après l'étape de durcissement du revêtement.

7. Composition durcissable par exposition aux UVV, comprenant :
(a) une résine ;
(b) un photoinitiateur de type cationique ; et
(c) un agent de réticulation de type polyol ;
dans laquelle la résine est choisie parmi le groupe constitué par une résine acrylique à base d'uréthane, une résine acrylique à base de polyester, des éthers vinyliques, une résine époxyde, et leurs combinaisons, la composition pouvant être durcie en dessous d'un banc ou d'un réseau de diodes électroluminescentes (LED) émettant des UVV dont la longueur d'onde la plus forte se situe dans la gamme des UVV de 400 à 450 nm.

8. Composition durcissable par exposition aux UVV selon la revendication 7, dans laquelle la composition comprend en outre un synergiste de type amine.

9. Composition durcissable par exposition aux UVV selon la revendication 7, dans laquelle le photoinitiateur de type cationique est un sel d'iodonium ou un sel de sulfonium et la composition comprend en outre un photosensibilisateur qui est choisi parmi le groupe constitué par l'isopropylthioxanthone, la 1-chloro-4-propoxy-thioxanthone, la 2,4-diéthylthioxanthone et la 2-chlorothioxanthone.

10. Composition durcissable par exposition aux UVV selon la revendication 7, dans laquelle la résine est une résine acrylique à base d'uréthane qui dérive d'un réactif de type polyol à base d'huile végétale et d'un diluant à base de triacrylate de triméthylolpropane, le réactif de type polyol à base d'huile végétale étant choisi parmi le groupe constitué par un polyol à base d'huile de ricin et un polyol à base d'huile de soja.

11. Couvre-sol comprenant une composition durcissable par exposition aux UVV, comprenant : (a) une résine choisie parmi le groupe constitué par une résine acrylique à base d'uréthane, une résine acrylique à base de polyester, et leurs combinaisons ; (b) un photoinitiateur de type cationique ; et (c) un agent de réticulation de type polyol biosourcé, la composition pouvant être durcie en dessous d'un banc ou d'un réseau de diodes électroluminescentes (LED) émettant des UVV dont la longueur d'onde la plus forte se situe dans la gamme des UVV de 400 à 450 nm.

12. Couvre-sol selon la revendication 11, dans lequel le photoinitiateur de type cationique est un sel d'iodonium ou un sel de sulfonium.

13. Couvre-sol selon la revendication 12, dans lequel la composition comprend un synergiste de type amine.

14. Couvre-sol selon la revendication 12, dans lequel la composition comprend en outre un photosensibilisateur, le photosensibilisateur étant choisi parmi le groupe constitué par l'isopropylthioxanthone, la 1-chloro-4-propoxy-thioxanthone, la 2,4-diéthylthioxanthone et la 2-chlorothioxanthone.

15. Couvre-sol selon la revendication 11, dans lequel la résine est une résine acrylique à base d'uréthane qui dérive d'un polyol à base d'huile végétale et d'un diluant à base de triacrylate de triméthylolpropane, dans lequel le polyol à base d'huile végétale est choisi parmi le groupe constitué par un polyol à base d'huile de ricin et un polyol à base d'huile de soja, et dans lequel le diluant à base de triacrylate de triméthylolpropane est éthoxylé.

16. Ustensile pour l'étanchéisation des joints comprenant: un cadre; un récipient fixé au cadre, le récipient contenant une composition durcissable selon la revendication 7 et le récipient possédant un applicateur pour appliquer la composition à une surface de substrat via un applicateur, la composition comprenant une résine, un photoinitiateur de type cationique et un agent de réticulation de type polyol ; un assemblage de lampe fixé au cadre, l'assemblage de lampe possédant un banc ou un réseau d'une source de rayonnement UVV sous la forme de diodes électroluminescentes (LED) pour durcir la composition durcissable appliquée, sur la surface du substrat ; et un mécanisme de déplacement comprenant au moins un rouleau, le mécanisme de déplacement étant configuré pour maintenir une hauteur constante de l'assemblage de lampe par rapport à la surface du substrat lors de l'utilisation de l'ustensile.

17. Ustensile pour l'étanchéisation des joints selon la revendication 16, dans lequel on peut régler la hauteur de la source de rayonnement UVV émis par des LED par rapport à la surface du substrat.
